# EUROPEAN PATENT APPLICATION

(11) **EP 1 760 815 A2**
(43) Date of publication of application: **07.03.2007**
(21) Application number: 06018128.6
(22) Date of filing: 30.08.2006
(51) Int. Cl.: H01M 8/04

(54) **Fuel cell having temperature-humidity controller**

(30) Priority: 05.09.2005 KR 20050082318
(71) Applicant: LG Electronics Inc., Yongdungpo-gu Seoul (KR); LG Chem, Ltd., Yongdungpo-Gu Seoul (KR)
(72) Inventor: Hwang, Yong-Jun, Mapo-Gu, Seoul (KR); Kim, Ki-Dong, Gimpo,Gyeonggi-Do (KR)
(74) Representative: Urner, Peter

(57) **Abstract**

A fuel cell having a temperature-humidity controller (800) comprising a fuel supply unit (100) for supplying a certain rate of fuel, a stack unit (300) for generating electricity and heat according to an electrochemical reaction between the fuel supplied from the fuel supply unit (100) and oxygen, a heat exchanger (700) for dividing a by-product generated from the stack unit (300) into gas and liquid to be re-circulated, and a temperature-humidity controller (800) for controlling temperature and humidity of indoor areas by introducing the gas divided in the heat exchanger (700) into the indoor areas.

## Description

### BACKGROUND OF THE INVENTION

### 1. Field of the Invention

The present invention relates to a fuel cell having a temperature-humidity controller, and particularly, to a fuel cell having a temperature-humidity controller which is capable of improving user's convenience by controlling both indoor temperature (heating) and humidity.

### 2. Background of the Invention

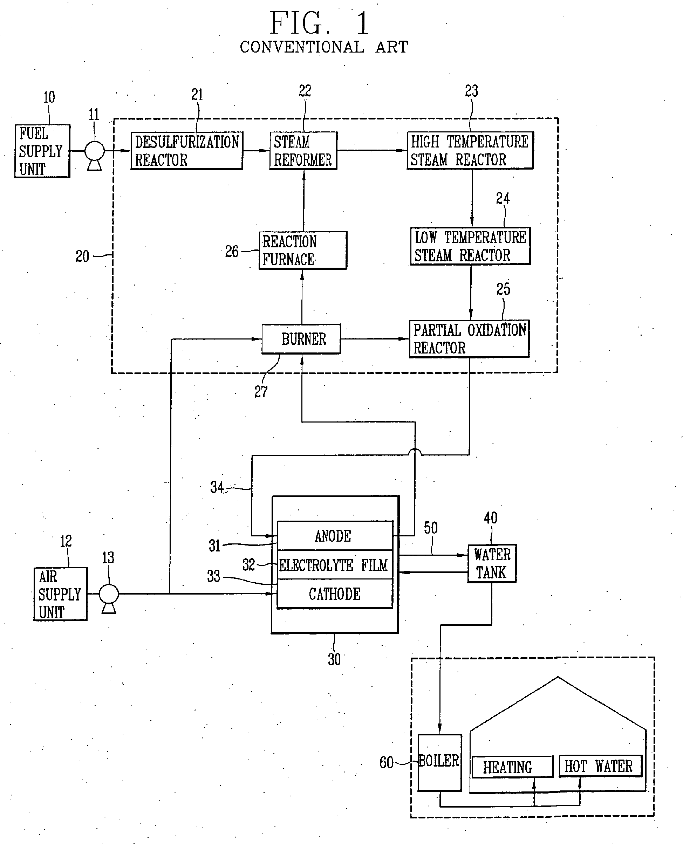

Fig. 1 is a schematic view showing a structure of a related art fuel cell.

As shown in Fig. 1, a related art fuel cell includes a fuel supply unit 10 for supplying a certain amount of fuel, a reformer 20 for generating a hydrogen containing gas containing a hydrogen gas and heat by receiving the fuel from the fuel supply unit 10, a stack unit 30 for generating an electricity and heat according to an electrochemical reaction between the hydrogen gas generated from the reformer 20 and oxygen separately supplied, and a water tank (or water container) 40 for supplying hot water by use of the heat generated from the stack unit 30.

The reformer 20 includes a desulfurization reactor 21 for introducing the fuel supplied from the fuel supply unit 10, water and air to thus remove sulfur contained in the fuel, a steam reformer 22 for reacting the fuel with steam, a high temperature steam reactor 23 for reacting carbon monoxide with steam, a low temperature steam reactor 24 for converting the carbon monoxide into carbon dioxide, a partial oxidation reactor 25 for converting non-oxidized carbon monoxide into carbon dioxide, a reaction furnace 26 for generating hydrogen from the fuel by a reforming process and a hydrogen refining process, and a burner 27 for supplying heat required to the reaction furnace 26 by being contact-coupled to the reaction furnace 26.

The stack unit 30 is implemented by stacking a plurality of unit cells, and includes an anode 31, an electrolyte film 32, and a cathode 33.

A connection line 50 through which water within the water tank 40 flows in and flows out is installed so as to connect a lower end portion of the stack unit 30 and a lower end portion of the water tank 40 to thus enable a heating of the water contained in the water tank 40 by use of the heat generated from the stack unit 30. By connecting the connection line 50 to the lower end portion of the water tank 40, relatively cold water is positioned at a lower side of the water tank 40 and relatively hot water is positioned at the upper side thereof according to a convection of the water, thereby reducing a time taken by heating the water.

The water tank 40 is connected to a boiler 60 into which the heated water is introduced so as to heat indoor areas and supply hot water.

In the related art fuel cell in accordance with the embodiment of the present invention having such construction, when the fuel supply unit 10 supplies to the reformer 20 water and fuel (e.g., methanol, natural liquefied gas, gasoline, or the like), a steam reforming and a partial oxidation are compositively executed in the reformer 20, thereby generating a hydrogen containing gas which contains a hydrogen gas, reaction heat, and water.

In the stack unit 30 having received the hydrogen containing gas, a hydrogen gas H₂ is supplied to a side of the anode 31 to generate an electrochemical oxidation reaction. Then, the hydrogen gas H₂ is ionized into a hydrogen ion H+ and an electron e- to thus be oxidized. The ionized hydrogen ion H+ is moved toward the cathode 33 via the electrolyte film 32 and the electron e- is moved toward the anode 31 via the electrolyte film 32, thereby generating an electricity and heat.

The electricity generated from the stack unit 30 is converted into the AC to thus be supplied to each house. The heat generated from the stack unit 30 is used to heat the water in the water tank 40. The heated water flows into the boiler 60 to be used to heat indoor areas or to supply hot water into the indoor areas.

However, regarding the related art fuel cell, an indoor temperature can be controlled by supplying the heated water in the water tank 40 to the boiler 60, but a separate device for controlling an indoor humidity is not provided. As a result, a separate home electronics such as a humidifier is required when indoor air is dry due to an increase of the indoor temperature.

### SUMMARY OF THE INVENTION

Therefore, an object of the present invention is to provide a fuel cell, having a temperature-humidity controller which is capable of improving user's convenience by controlling both indoor temperature (heating) and humidity.

To achieve these and other advantages and in accordance with the purpose of the present invention, as embodied and broadly described herein, there is provided a fuel cell having a temperature-humidity controller comprising a fuel supply unit for supplying a certain rate of fuel, a stack unit for generating electricity and heat according to an electrochemical reaction between the fuel supplied from the fuel supply unit and oxygen, a heat exchanger for dividing a by-product generated from the stack unit into gas and liquid to be re-circulated, and a temperature-humidity controller for controlling temperature and humidity of indoor areas by introducing the gas divided in the heat exchanger into the indoor areas.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a schematic view showing a structure of a related art fuel cell;
Fig. 2 is a schematic view showing a structure of a fuel cell having a temperature-humidity controller in accordance with an embodiment of the present invention; and
Fig. 3 is a flow chart showing operation processes of the fuel cell shown in Fig. 2.

### DETAILED DESCRIPTION OF THE INVENTION

Description will now be given in detail of the present invention, with reference to the accompanying drawings.

The present invention provides a fuel cell having a temperature-humidity controller comprising a fuel supply unit for supplying a certain rate of fuel, a stack unit for generating electricity and heat according to an electrochemical reaction between the fuel supplied from the fuel supply unit and oxygen, a heat exchanger for dividing a by-product generated from the stack unit into gas and liquid to be re-circulated, and a temperature-humidity controller for controlling temperature and humidity of indoor areas by introducing the gas divided in the heat exchanger into the indoor areas.

Hereinafter, the present invention according to the present invention will be explained in detail.

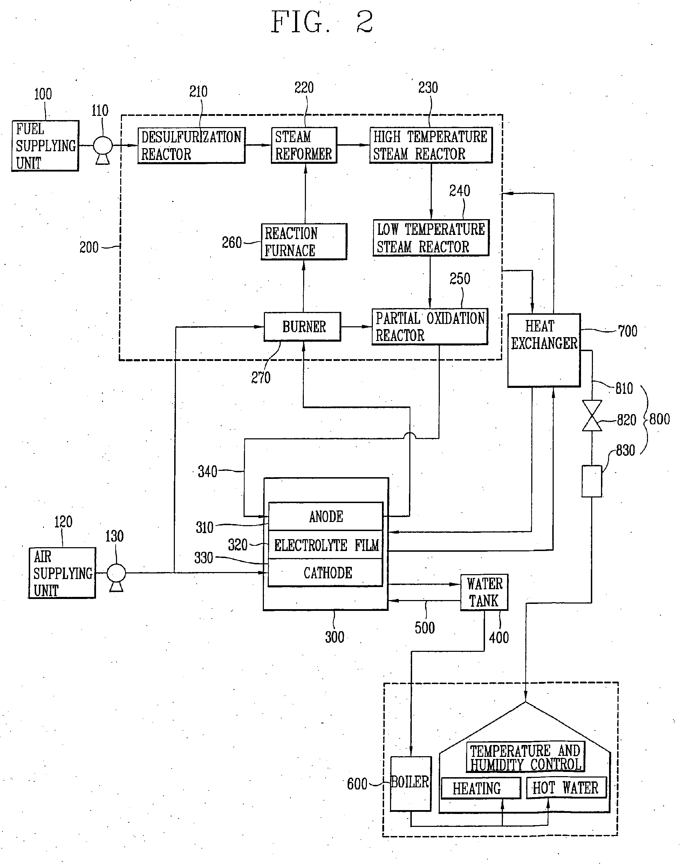

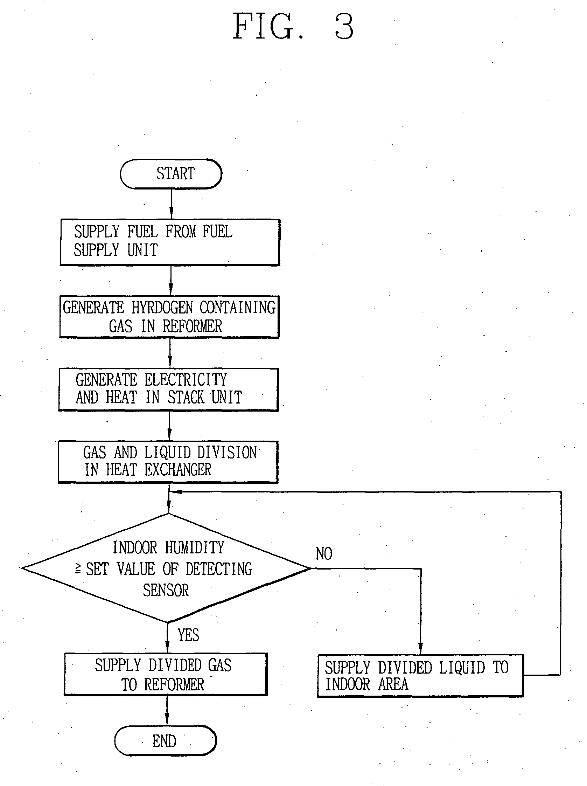

Fig. 2 is a schematic view showing a structure of a fuel cell having a temperature-humidity controller in accordance with an embodiment of the present invention; and Fig. 3 is a flow chart showing operation processes of the fuel cell shown in Fig. 2.

As shown in Figs. 2 and 3, a fuel cell having a temperature-humidity controller in accordance with an embodiment of the present invention includes a fuel supply unit 100 for supplying a certain rate of fuel, a reformer 200 for generating a hydrogen containing gas containing a hydrogen gas by receiving the fuel from the fuel supply unit 100, a stack unit 300 for generating an electricity and heat according to an electrochemical reaction between the hydrogen containing gas generated from the reformer 200 and oxygen separately supplied, a water tank 400 connected to one side of the stack unit 300 for heating water contained therein by use of the heat generated from the stack unit 300, a heat exchanger 700 for dividing a by-product generated from the stack unit 300 into gas and liquid to be re-circulated, and a temperature-humidity controller 800 for controlling temperature and humidity of indoor areas by introducing the gas divided in the heat exchanger 700 into the indoor areas.

The reformer 200 includes a desulfurization reactor 210 for introducing the fuel supplied from the fuel supply unit 100, water and air to thus remove sulfur contained in the fuel, a steam reformer 220 for reacting the fuel with steam, a high temperature steam reactor 230 for reacting carbon monoxide with steam, a low temperature steam reactor 240 for converting the carbon monoxide into carbon dioxide, a partial oxidation reactor 250 for converting non-oxidized carbon monoxide into carbon dioxide, a reaction furnace 260 for generating hydrogen from the fuel by a reforming process and a hydrogen refining process, and a burner 270 for supplying heat required to the reaction furnace 260 by being contact-coupled to the reaction furnace 260.

The stack unit 300 is implemented by stacking a plurality of unit cells, and includes an anode 310, an electrolyte film 320, and a cathode 330.

A connection line 500 through which water within the water tank 400 flows in and flows out is installed so as to connect a lower end portion of the stack unit 300 and a lower end portion of the water tank 400 to thus enable a heating of the water contained in the water tank 400 by use of the heat generated from the stack unit 300. By connecting the connection line 500 to the lower end portion of the water tank 400, relatively cold water is positioned at a lower side of the water tank 400 and relatively hot water is positioned at the upper side thereof according to a convection of the water, thereby reducing a time taken by heating the water.

The water tank 400 is connected to a boiler 600 into which the heated water is introduced so as to heat indoor areas and supply hot water.

The heat exchanger 700, on the other hand, refers to a device for dividing the by-product generated from the stack unit 300 into gas and liquid, wherein the divided gas is re-supplied to the reformer 200 and the liquid is re-supplied to the stack unit 300 to be then circulated. One side of the heat exchanger 700 is connected to the reformer 200 and the other side thereof is connected to the stack unit 300.

The temperature-humidity controller 800 is provided with an introduction line 810 connected to a side of an upper portion of the heat exchanger 700 in a height direction of the heat exchanger 700 so as to introduce the gas generated from the heat exchanger 700 into the indoor areas, and an introduction valve 820 disposed at one side of the introduction line 810 so as to selectively control the introduction (inflow) of the gas.

In addition, a temperature-humidity detecting sensor 830 is further disposed at one side of the introduction line 810 to thus control opening and closing of the introduction valve 820 by sensing indoor temperature and humidity.

In the fuel cell having the temperature-humidity controller in accordance with the embodiment of the present invention having such construction, when the fuel supply unit 100 supplies to the reformer 200 water and fuel (e.g., methanol, liquefied natural gas (i.e., LNG), gasoline, or the like), a steam reforming and a partial oxidation are compositively executed in the reformer 200, thereby generating a hydrogen containing gas which contains a hydrogen gas, reaction heat, and water.

In the stack unit 300 having received the hydrogen containing gas, a hydrogen gas H₂ is supplied to a side of the anode 310 to generate an electrochemical oxidation reaction. Then, the hydrogen gas H₂ is ionized into a hydrogen ion H+ and an electron e- to thus be oxidized. The ionized hydrogen ion H+ is moved toward the cathode 330 via the electrolyte film 320 and the electron e- is moved toward the anode 310 via the electrolyte film 320, thereby generating an electricity and heat.

The electricity generated from the stack unit 30 is converted into the AC to thus be supplied to each house. The heat generated from the stack unit 30 is used to heat the water in the water tank 40. The heated water flows into the boiler 60 to be used to heat indoor areas or to supply hot water into the indoor areas.

The by-product generated from the stack unit 300 is supplied to the heat exchanger 700 to thereafter be divided into gas and liquid. The divided liquid is supplied to the stack unit 300 for use and the divided gas is re-supplied to the reformer 200 for use. At the same time, the detecting sensor 830 disposed at the one side of the introduction line 810 senses indoor humidity. If it is sensed such that humidity needs to be supplied to the indoor areas (i.e. the indoor humidity ≥ a set value of the detecting sensor 830), the introduction valve 820 is opened to supply the gas containing a great deal of moisture to the indoor areas, thereby increasing the indoor humidity.

When the indoor areas are appropriately as humid as the user desires, the detecting sensor 830 senses the humidity and the introduction valve 820 is closed. Accordingly, the humid gas is not introduced into the indoor areas. The gas is re-supplied only to the reformer 200 to be then used.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A fuel cell having a temperature-humidity controller comprising:
a fuel supply unit for supplying a certain rate of fuel;
a stack unit for generating electricity and heat according to an electrochemical reaction between the fuel supplied from the fuel supply unit and oxygen;
a heat exchanger for dividing a by-product generated from the stack unit into gas and liquid to be re-circulated; and
a temperature-humidity controller for controlling temperature and humidity of indoor areas by introducing the gas divided in the heat exchanger into the indoor areas.

2. The fuel cell of claim 1, wherein the temperature-humidity controller comprises:
an introduction line connected to a side of an upper portion of the heat exchanger in a height direction of the heat exchanger so as to introduce the gas generated from the heat exchanger into the indoor areas; and
an introduction valve disposed at one side of the introduction line so as to selectively control the introduction or inflow of the gas.

3. The fuel cell of claim 2, wherein a temperature-humidity detecting sensor is further disposed at one side of the introduction line to thus control opening and closing of the introduction valve by sensing indoor temperature and humidity.

4. A fuel cell having a temperature-humidity controller comprising:
a fuel supply unit for supplying a certain rate of fuel;
a stack unit for generating electricity and heat according to an electrochemical reaction between the fuel supplied from the fuel supply unit and oxygen;
a heat exchanger for dividing a by-product generated from the stack unit into gas and liquid to be re-circulated;
a temperature-humidity controller including an introduction line connected to a side of an upper portion of the heat exchanger in a height direction of the heat exchanger so as to introduce the gas generated from the heat exchanger into the indoor areas, and an introduction valve disposed at one side of the introduction line so as to selectively control the introduction or inflow of the gas; and
a temperature-humidity detecting sensor disposed at one side of the introduction line to thus control opening and closing of the introduction valve by sensing indoor temperature and humidity.
